Europäisches Patentamt

**European Patent Office**

**Office européen des brevets**

(19)

(11) Publication number: **0 149 479**
**B1**

(12) # EUROPEAN PATENT SPECIFICATION

(45) Date of publication of patent specification: **14.09.88**

(51) Int. Cl.⁴: **H 01 M 8/00, H 01 M 8/24**

(21) Application number: **85100243.6**

(22) Date of filing: **11.01.85**

(54) **Fuel cell.**

(30) Priority: **14.01.84 NL 8400127**

(43) Date of publication of application:
**24.07.85 Bulletin 85/30**

(45) Publication of the grant of the patent:
**14.09.88 Bulletin 88/37**

(84) Designated Contracting States:
**AT BE CH DE FR GB IT LI LU NL SE**

(56) References cited:
**EP-A-0 039 235**
**DE-A-1 596 284**
**DE-A-1 814 109**
**DE-A-1 815 690**
**DE-A-1 918 353**
**DE-A-1 947 899**
**US-A-3 282 736**
**US-A-3 871 922**

**PRINCIPES TECHNOLOGIE APPLICATIONS
DES PILES A COMBUSTIBLE, 1972, pages
41,84, Editions Technip, Paris, FR; Y. BREELLE
et al.: "Choix des matériaux d'assemblage"**

(73) Proprietor: **Electrochemische Energieconversie
N.V.
Boeretang 200
B-2400 Mol (BE)**

(72) Inventor: **Alfenaar, Marinus
Panoramaweg 6
NL-6155 LZ Schinnen (NL)**

(74) Representative: **Hoogstraten, Willem Cornelis
Roeland et al
OCTROOIBUREAU DSM Postbus 9
NL-6160 MA Geleen (NL)**

(56) References cited:
**PRODUCT ENGINEERING, vol. 37, no. 9, 25th
April 1966, page 40; C. DEIBERT: "A new way to
improve the electrochemical efficiency of
hydrocarbon fuel cells"**

Courier Press, Leamington Spa, England.

## Description

The invention relates to a fuel cell comprising an anode and a cathode, the anode being connectable with the cathode through an electrical connection.

Such a fuel cell is known from German patent application 1,918,353. According to this publication there is made a short circuit between the anode and cathode during start up of the fuel cell.

This is a temporary connection only used in the start-up procedure, for increasing the speed of operation of the fuel cell. During normal operation there is no electrical connection between the anode and the cathode.

A fuel cell will exhibit an internal leakage current during operation. This has hitherto been regarded as a major disadvantage inasmuch as the efficiency of power generation is adversely affected by this internal leakage current.

To prevent internal leakage currents during operation, known fuel cells are designed so that during normal operation the anode and the cathode within the same cell are insulated from one another by materials with a volume resistivity of $10^{10}$—$10^{14}$ $\Omega$cm and above. Examples of such fuel cells are given in the CA Patents 867,991 and 1,129,946 and in the US Patents 4,048,386 and 4,233,371. In the handbook by Y. Bréelle and others, Principes technologie applications de piles à combustible, Institut Francais du Pétrole, Paris, 1972 it is emphatically recommended on page 41 to thoroughly insulate the electrodes from another within the fuel cell.

The known state of the art is strongly biased against the reducing of the electrical resistance between the anode and the cathode. On the contrary, attempts have been made to increase this electrical resistance in order to achieve a still further reaching insulation between the relative anode and cathode.

It is therefor an object of the invention to improve the operation of a fuel cell.

This object is achieved in that both the anode and cathode are imbedded in a frame of electrically conductive plastic, which frames are electrically connected with one another, the arithmetic product of the electrical resistance of the said connection in $\Omega$ and the active area of the cathode in $m^2$ lies between $10^{-4}$ and $10 \, \Omega \, m^2$.

An advantage of the new fuel cell according to the invention is the much better stability in time in comparison with otherwise identical fuel cells with a large electrical resistance between the anode and the cathode within the cell.

Most suitable is the emodiment in which the, preferably flat, electrodes are embedded in a frame consisting of a sufficiently electrically conductive material, preferably electrically conductive plastic, for instance plastic incorporating a suitable number of carbon particles and/or metal particles, the frames of anode and cathode within a cell being electrically conductive connected with one another for instance through their being in direct contact with one another for instance through welds or through an electrically conductive bonding agent such as an epoxy glue containing metal powder. A most suitable embodiment of flat electrodes embedded in a frame consisting wholly or largely of plastic is described in the CA Patent 1,129,946, which for reasons of brevity is referred to for a more elaborate description of these electrodes.

Another most suitable embodiment of the fuel cell according to the invention consists at least of a, preferably flat, anode and a, preferably flat, cathode embedded and/or encapsulated in a sufficiently conductive thermosetting synthetic resin. For suitable methods of fabricating such fuel cells in which the electrodes are embedded in thermosetting resin, reference is made to the contents of US Patents 4,048,386 and 4,233,371.

Suitable plastic materials which are specified in US Patent 4,233,271 are for instance modified or unmodified polyesters, epoxy resins, polyvinyl esters, polyacrylates etc. Epoxy resins are preferred.

A fuel cell according to the invention is particularly suitable to be used as an oxygen-hydrogen cell with advantageously an alkaline electrolyte.

The invention is further elucidated with the following example and the comparative experiment.

### Example I

A battery of fuel cells is composed of 18 fuel cells, which fuel cells are electrically arranged in series in 9 parallel pairs. All fuel cells are virtually identical and consist of a flat anode with an active area of 0.03 $m^2$ and a feat cathode with an active area of 0.03 $m^2$ embedded in a frame consisting of a plastic that has been made electrically conductive by means of carbon particles. Both the anode and the cathode contain platinum on high surface area carbon as catalyst. The total electrical resistance between an anode and a cathode in each fuel cell amounts to 20—30 $\Omega$.

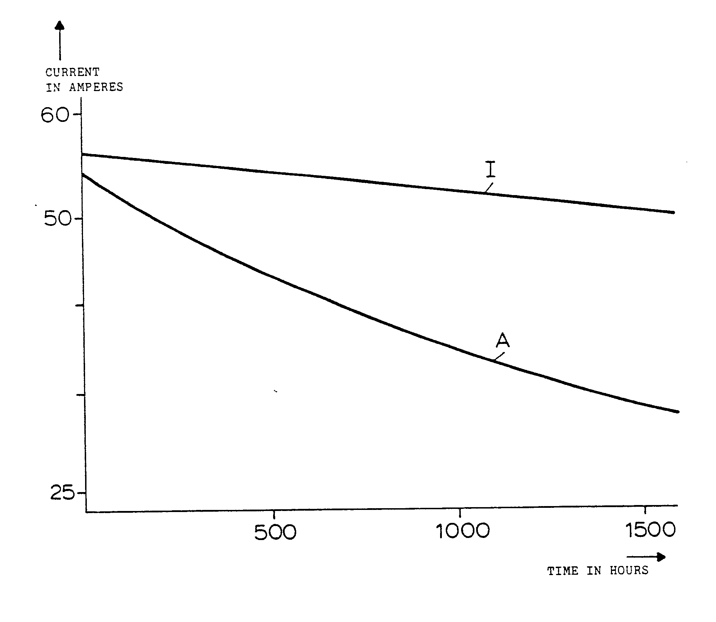

Every other week this battery of fuel cells is loaded for 1.5 hours at a voltage of 6 volts at 65°C, using hydrogen as fuel and oxygen in the form of air as oxidant. On each occasion the current is measured which the battery still delivers. The results of these measurements are depicted by line I in the figure.

### Comparative Experiment A

A battery of fuel cells is composed of 18 fuel cells, which fuel cells are electrically arranged in series in 9 parallel pairs. All fuel cells are virtually identical and consist of the same type of anode and the same type of cathode as applied in Example I, embedded in a non-conductive plastic. The total electrical resistance between an anode and a cathode in each fuel cell is in excess of $10^6 \Omega$.

In the same manner as in Example I this battery of fuel cells is loaded every other week for 1.5 hours at a voltage of 6 Volts at 65°C. Again, on each occasion the current is measured which the battery still delivers. The results of these measurements are depicted by line A in the figure.

The tests described above demonstrate that a battery of fuel cells according to the invention exhibits a virtually constant performance for a much longer period of time than a battery of fuel cells according to the state of the art.

## Claims

1. Fuel cell comprising an anode and a cathode, the anode being connectable with the cathode through an electrical connection, characterized in that both the anode and cathode are embedded in a frame of electrically conductive plastic, which frames are electrically conductive connected with one another, and the arithmetic product of the electrical resistance of the said connection in $\Omega$ and the active area of the cathode in $m^2$ lies between $10^{-4}$ and $10 \Omega m^2$.

2. Fuel cell according to Claim 1, characterized in that the anode and the cathode are embedded and/or encapsulated in a sufficiently electrically conductive thermosetting synthetic resin.

3. Fuel cell according to one of the Claims 1—2, characterized in that it contains as electrically conductive plastic a plastic incorporating carbon particles and/or metal particles.

4. Fuel cell according to one of the Claims 1—3, characterized in that the anode and the cathode are flat.

5. Fuel cell according to one of the Claims 1—4, characterized in that the aforementioned arithmetic product lies between $10^{-3}$ and $5 \Omega m^2$.

6. Fuel cell according to one of the Claims 1—5, characterized in that it is applied as an oxygen-hydrogen cell with alkaline electrolyte.

## Patentansprüche

1. Brennstoffzelle bestehend aus einer Anode und einer Kathode, wobei die Anode mit der Kathode über eine elektrische Verbindung verbunden werden kann, dadurch gekennzeichnet, daß sowohl die Anode als auch die Kathode in einen Rahmen aus elektrisch leitendem Kunststoff eingebettet sind, welche Rahmen elektrisch miteinander verbunden sind, wobei das arithmetische Produkt des elektrischen Widerstandes dieser Verbindung in $\Omega$ und der aktiven Kathodenfläche in $m^2$ zwischen $10^{-4}$ und $10 \Omega m^2$ liegt.

2. Brennstoffzelle nach Anspruch 1, dadurch gekennzeichnet, daß die Anode und die Kathode in einem genügend elektrisch leitendem wärmehärtbaren Kunstharz eingebettet und/oder eingekapselt sind.

3. Brennstoffzelle nach einem der Ansprüche 1—2, dadurch gekennzeichnet, daß sie als elektrisch leitenden Kunststoff einen Kunststoff, in den Kohle- und/oder Metallteilchen inkorporiert sind, enthält.

4. Brennstoffzelle nach einem der Ansprüche 1—3, dadurch gekennzeichnet, daß die Anode und die Kathode flach sind.

5. Brennstoffzelle nach einem der Ansprüche 1—4, dadurch gekennzeichnet, daß das vorgenannte arithmetische Produkt zwischen $10^{-3}$ und $5 \Omega m^2$ liegt.

6. Brennstoffzelle nach einem der Ansprüche 1—5, dadurch gekennzeichnet, daß sie als Sauerstoff-Wasserstoffzelle mit alkalischem Elektrolyten eingesetzt wird.

## Revendications

1. Cellule à combustible comprenant une anode et une cathode, l'anode étant connectable avec la cathode par une connexion électrique, caractérisée en ce qu'aussi bien l'anode que la cathode sont encastrées dans un cadre en matière plastique électriquement conductrice, ces cadres étant électriquement connectés les uns aux autres et le produit arithmétique de la résistance électrique de ladite connexion en $\Omega$ et la surface active de la cathode en $m^2$ est compris entre $10^{-4}$ et $10 \Omega m^2$.

2. Cellule à combustible selon la revendication 1, caractérisée en ce que l'anode et la cathode sont noyées et/ou enrobées dans une résine synthétique thermodurcissable suffisamment conductrice d'électricité.

3. Cellule à combustible selon la revendication 1 ou 2, caractérisée en ce qu'elle contient à titre de matière plastique conductrice d'électricité, une matière plastique contenant des particules de carbone et/ou des particules métalliques.

4. Cellule à combustible selon l'une quelconque des revendications 1 à 3, caractérisée en ce que l'anode et la cathode sont plates.

5. Cellule à combustible selon l'une quelconque des revendications 1 à 4, caractérisée en ce que ledit produit arithmétique est compris entre $10^{-3}$ et $5 \Omega m^2$.

6. Cellule à combustible selon l'une quelconque des revendications 1 à 5, caractérisée en ce qu'elle est appliquée comme une cellule à oxygène-hydrogène contenant un électrolyte alcalin.

0 149 479